(19) **Europäisches Patentamt**

**European Patent Office**

**Office européen des brevets**

(11) **EP 1 724 978 A2**

(12) **EUROPEAN PATENT APPLICATION**

(43) Date of publication:
**22.11.2006 Bulletin 2006/47**

(51) Int Cl.:
*H04L 12/56* (2006.01)

(21) Application number: **06113939.0**

(22) Date of filing: **15.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.05.2005 FI 20055242**

(71) Applicant: **Nokia Corporation**
**02150 Espoo (FI)**

(72) Inventors:
• **Yu, Ling**
**90650 Oulu (FI)**
• **Phan, Vinh Van**
**90560 Oulu (FI)**

(74) Representative: **Antila, Harri Jukka Tapani**
**Kolster Oy Ab,**
**P.O. Box 148,**
**Iso Roobertinkatu 23**
**00121 Helsinki (FI)**

(54) **Radio resource control in HSUPA system**

(57) Radio resource control in an HSUPA system is provided. The control procedure includes: communicating data blocks between user equipment and a network infrastructure over a physical High Speed Uplink Packet Access channel; communicating block information messages between the user equipment and the network infrastructure; and adjusting a power offset value between the physical High Speed Up-link Packet Access channel and a Dedicated Physical Control Channel on the basis of at least one block information message.

Fig. 3

EP 1 724 978 A2

## Description

### Field

The invention relates to a method of controlling radio resources in an HSUPA system, user equipment supporting an HSUPA protocol, a wireless telecommunications system supporting an HSUPA protocol, a network element, a computer program product encoding a computer program of instructions for executing a computer process for controlling radio resources in an HSUPA system, and a computer program distribution medium readable by a computer and encoding a computer program of instructions for executing a computer process for controlling radio resources in an HSUPA system.

### Background

High Speed Uplink Packet Access (HSUPA) is a packet-based data service in a WCDMA (Wideband Code Division Multiple Access) uplink with typical data transmission capacity of a few megabits per second, thus enabling the use of symmetric high-speed data services, such as video conferencing, between user equipment and a network infrastructure.

An uplink data transfer mechanism in the HSUPA is provided by physical HSUPA channels, such as an E-DPDCH (Enhanced Dedicated Physical Data Channel), implemented on top of WCDMA uplink physical data channels, such as a DPCCH (Dedicated Physical Control Channel) and a DPDCH (Dedicated Physical Data Channel), thus sharing radio resources, such as power resources, with the WCDMA uplink physical data channels. The physical L1 (Layer 1) control information is carried on an E-DPCCH that may be code- or time-multiplexed with the E-DPDCH channels.

The new physical channels of HSUPA should be power controlled. One possibility for the E-DPDCH and E-DPCCH power control can be based on the transmission power of a DPCH (Dedicated Physical Channel), which is fast power controlled and uses a close loop power control mechanism. Thus, an RNC (Radio Network Controller) only has to set the power offset between the E-DPDCH/E-DPCCH and DPCCH. However, due to different characteristics of the DPCH and E-DPDCH/E-DPCCH, it is difficult for the RNC to give accurate power offset values. Further, the dynamic adjustment of power offset controlled by the RNC will increase signalling overhead over lub and air interfaces if the power offset adjustment interval is low.

The sharing of the radio resources results in inflexibility in radio resource allocation to the physical HSUPA channels and the WCDMA physical data channels. Therefore, there is a need to consider improvements for the radio resource control in an HSUPA system.

### Brief description of the invention

An object of the invention is to provide an improved method, user equipment, a wireless telecommunications system, a network element, a computer program product, and a computer program distribution medium. According to a first aspect of the invention, there is provided a method of controlling radio resources in a High Speed Uplink Packet Access system, the method comprising: communicating data blocks between user equipment and a network infrastructure over a physical High Speed Uplink Packet Access channel; communicating block information messages between the user equipment and the network infrastructure; and adjusting a power offset value between the physical High Speed Up-link Packet Access channel and a Dedicated Physical Control Channel on the basis of at least one block information message.

According to a second aspect of the invention, there is provided user equipment supporting a High Speed Uplink Packet Access protocol, including: a transmitter for communicating data blocks between the user equipment and a network infrastructure over a physical High Speed Uplink Packet Access channel; a receiver for communicating block information messages between the user equipment and the network infrastructure; and a power controller for adjusting a power offset value between the physical High Speed Up-link Packet Access channel and a Dedicated Physical Control Channel on the basis of at least one block information message.

According to a third aspect of the invention, there is provided user equipment supporting a High Speed Uplink Packet Access protocol, including: a first communicating means for communicating data blocks between the user equipment and a network infrastructure over a physical High Speed Uplink Packet Access channel; a second communicating means for communicating block information messages; and adjusting means for adjusting a power offset value between the physical High Speed Uplink Packet Access channel and a Dedicated Physical Control Channel on the basis of at least one block information message.

According to a fourth aspect of the invention, there is a wireless telecommunications system supporting a High Speed Uplink Packet Access protocol, the wireless telecommunications system including a network infrastructure and user equipment and comprising: a transmitter for communicating data blocks between the user equipment and the network infrastructure over a physical High Speed Uplink Packet Access channel; a receiver for communicating block information messages between the user equipment and the network infrastructure; and a power controller for adjusting a power offset value between the physical High Speed Uplink Packet Access channel and a Dedicated Physical Control Channel on the basis of at least one block information message.

According to a fifth aspect of the invention, there is provided a wireless telecommunications system supporting a High Speed Uplink Packet Access protocol, the wireless telecommunications system comprising: a first communicating means for communicating data blocks between user equipment and a network infrastructure over a physical High Speed Uplink Packet Access channel; a second communicating means for communicating block information messages between the user equipment and the network infrastructure; and adjusting means for adjusting a power offset value between the physical High Speed Uplink Packet Access channel and a Dedicated Physical Control Channel on the basis of at least one block information message.

According to a sixth aspect of the invention, there is provided a network element of a wireless telecommunications system supporting a High Speed Uplink Packet Access protocol, the network element comprising detection means for detecting a block error rate value of High Speed Uplink Packet Access channels, comparing means for comparing the difference between the detected block error rate value and a target block error rate value, generating means for generating a power control command on the basis of the comparison, and communication means for sending the power control command to user equipment, a power offset value between the physical High Speed Uplink Packet Access channel and a Dedicated Physical Control Channel being adjusted on the basis of the power control command.

According to a seventh aspect of the invention, there is provided a computer program product encoding a computer program of instructions for executing a computer process for controlling radio resources in a High Speed Uplink Packet Access system, the process including: communicating data blocks between user equipment and a network infrastructure over a physical High Speed Uplink Packet Access channel; communicating block information messages between the user equipment and the network infrastructure; and adjusting a power offset value between the physical High Speed Uplink Packet Access channel and a Dedicated Physical Control Channel on the basis of at least one block information message.

According to yet another aspect of the invention, there is provided a computer program distribution medium readable by a computer and encoding a computer program of instructions for executing a computer process for controlling radio resources in a High Speed Uplink Packet Access system, the process including: communicating data blocks between user equipment and a network infrastructure over a physical High Speed Uplink Packet Access channel; communicating block information messages between the user equipment and the network infrastructure; and adjusting a power offset value between the physical High Speed Uplink Packet Access channel and a Dedicated Physical Control Channel on the basis of at least one block information message.

As an advantage, the invention enables a smart and simple method of dynamically adjusting power offsets between HSUPA and DPCH channels. Thus, a dynamic power adjustment mechanism for physical HSUPA channels is enabled. The flexibility of power control is increased and the use of optimum transmission power for physical HSUPA channels is allowed.

**List of drawings**

In the following, the invention will be described in greater detail with reference to the embodiments and the accompanying drawings, in which

Figure 1 shows a first example of a wireless telecommunications system;
Figure 2 shows an example of an HSUPA channel structure and an HSUPA protocol;
Figure 3 shows a second example of a wireless telecommunications system;
Figure 4 shows another example of a wireless telecommunications system;
Figure 5 illustrates an example of the method of controlling radio resources in a High Speed Uplink Packet Access system; and
Figure 6 illustrates another example of the method of controlling radio resources in a High Speed Uplink Packet Access system.

**Description of embodiments**

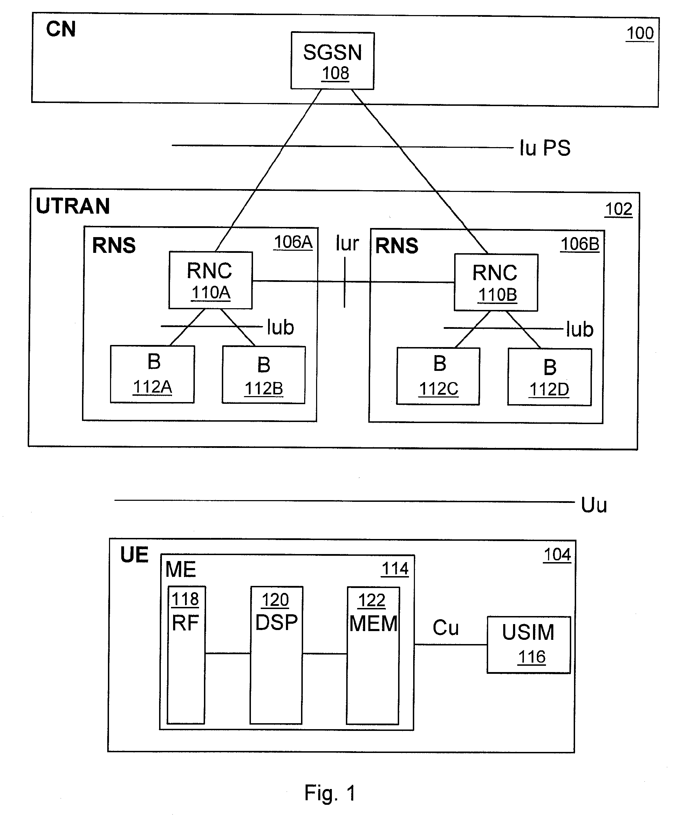

Figure 1 illustrates an example of a wireless telecommunications system to which the present solution may be applied. Below, embodiments of the invention will be described using the UMTS (Universal Mobile Telecommunications System) as an example of the wireless telecommunications system. The invention may, however, be applied to any wireless telecommunications system that supports HSUPA protocol elements, such as HARQ (Hybrid Automatic Retransmission Request) and AMC (Adaptive Modulation and Coding). The structure and the functions of such a wireless telecommunications system and those of the associated network elements are only described when relevant to the invention.

The wireless telecommunications system may be divided into a core network (CN) 100, a UMTS terrestrial radio access network (UTRAN) 102, and user equipment (UE) 104. The core network 100 and the UTRAN 102 form a network infrastructure of the wireless telecommunications system.

The UTRAN 102 is typically implemented with wideband code division multiple access (WCDMA) radio access technology.

The core network 100 includes a serving GPRS support node (SGSN) 108 connected to the UTRAN 102 over an lu PS interface. The SGSN 108 represents the center point of the packet-switched domain of the core network 100. The main task of the SGSN 108 is to transmit packets to the user equipment 104 and to receive packets from the user equipment 104 by using the UTRAN 102. The SGSN 108 may contain subscriber and location information related to the user equipment 104.

The UTRAN 102 includes radio network sub-systems (RNS) 106A, 106B, each of which includes at least one radio network controller (RNC) 110A, 110B and nodes B 112A, 112B, 112C, 112D.

Some functions of the radio network controller 110A, 110B may be implemented with a digital signal processor, memory, and computer programs for executing computer processes. The basic structure and the operation of the radio network controller 110A, 110B are known to one skilled in the art and only the details relevant to the present solution are discussed in detail.

The node B 112A, 112B, 112C, 112D implements a Uu interface, through which the user equipment 104 may access the network infrastructure. Some functions of the base station 112A, 112B, 112C, 112D may be implemented with a digital signal processor, memory, and computer programs for executing computer processes. The basic structure and operation of the base station 112A, 112B, 112C, 112D are known to one skilled in the art and only the details relevant to the present solution are discussed in detail.

The user equipment 104 may include two parts: mobile equipment (ME) 114 and a UMTS subscriber identity module (USIM) 116. The mobile equipment 114 typically includes radio frequency parts (RF) 118 for providing the Uu interface. The user equipment 104 further includes a digital signal processor 120, memory 122, and computer programs for executing computer processes. The user equipment 104 may further comprise an antenna, a user interface, and a battery not shown in Figure 1.

The USIM 116 comprises user-related information and information related to information security in particular, such as, an encryption algorithm.

The basic structure and operation of the user equipment 104 are known to one skilled in the art and only the details relevant to the present solution are discussed in detail.

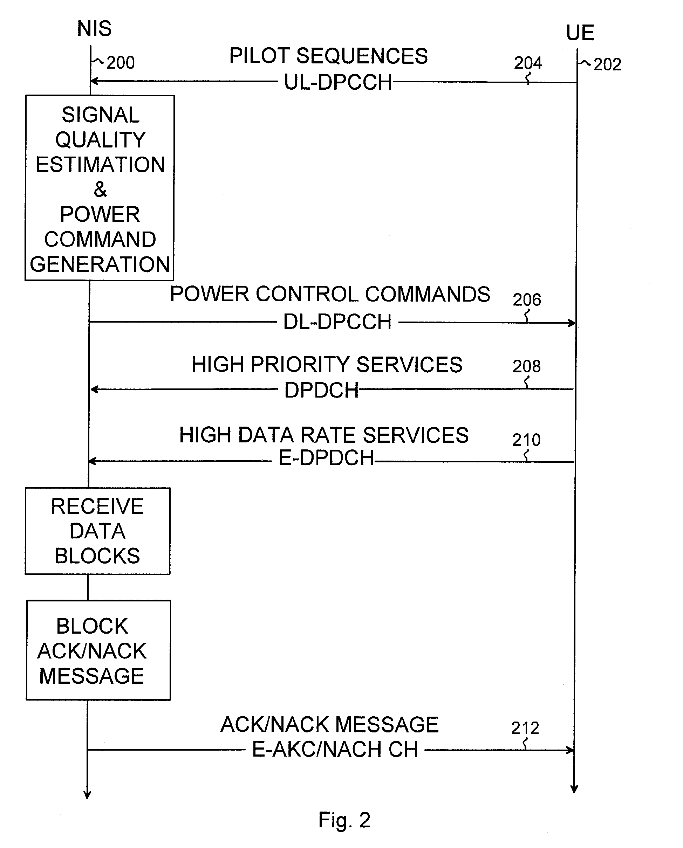

Figure 2 illustrates an example of physical channels and procedures associated with the HSUPA protocol. Vertical axis 200 represents the network infrastructure (NIS) and vertical axis 202 represents the user equipment.

An uplink control channel, such as an uplink DPCCH (Dedicated Physical Control Channel) defined in the 3GPP (3rd Generation Partnership Project) specification, transmitted by the user equipment 200 includes pilot sequences. The network infrastructure 200 encodes the pilot sequences and estimates signal quality parameters, such as SIR (Signal-to-Interference Ratio), of the uplink DPCCH 204.

The network infrastructure 200 generates power control commands on the basis of the signal quality parameters and transmits the power control commands to the user equipment 202 over a downlink control channel 206, such as a downlink DPCCH. The power control commands may be associated with an inner loop of a closed-loop power control protocol, for example.

The user equipment 202 may be connected to the network infrastructure 200 over an uplink physical data channel 208, such as a DPDCH (Dedicated Physical Data channel) defined in the 3GPP specification. The up-link physical data channel 208 represents a conventional data channel that as such excludes the use of the HSUPA protocol. The uplink physical data channel 208 is typically used for high priority services, such as conversational class speech services and RRC (Radio Resource Signalling), in relation to the HSUPA data transfer capacity.

High data-rate packet-services in the uplink are provided by a physical HSUPA channel 210, such as an E-DPDCH (Enhanced Dedicated Physical Data Channel) defined in the 3GPP specification. The E-DPDCH transfers data blocks in predetermined temporal intervals, such as a TTI (Transmission Time Interval). Each data block is received, and a CRC (Cyclic Redundancy Check) procedure, for example, is used to test the success of the reception of the block.

A block acknowledgement message is generated for each data block on the basis of the test. If the data block was received successfully, the block acknowledgement message indicates "acknowledgement (ACK)". If the data block was received unsuccessfully, the block acknowledgement message indicates "non-acknowledgement (NACK)". The block acknowledgement message is transmitted from the network infrastructure 200 over an HSUPA acknowledgement message channel 212.

The uplink physical data channel 208 and the physical HSUPA channel 210 are parallel code channels, each typically having different channel codes.

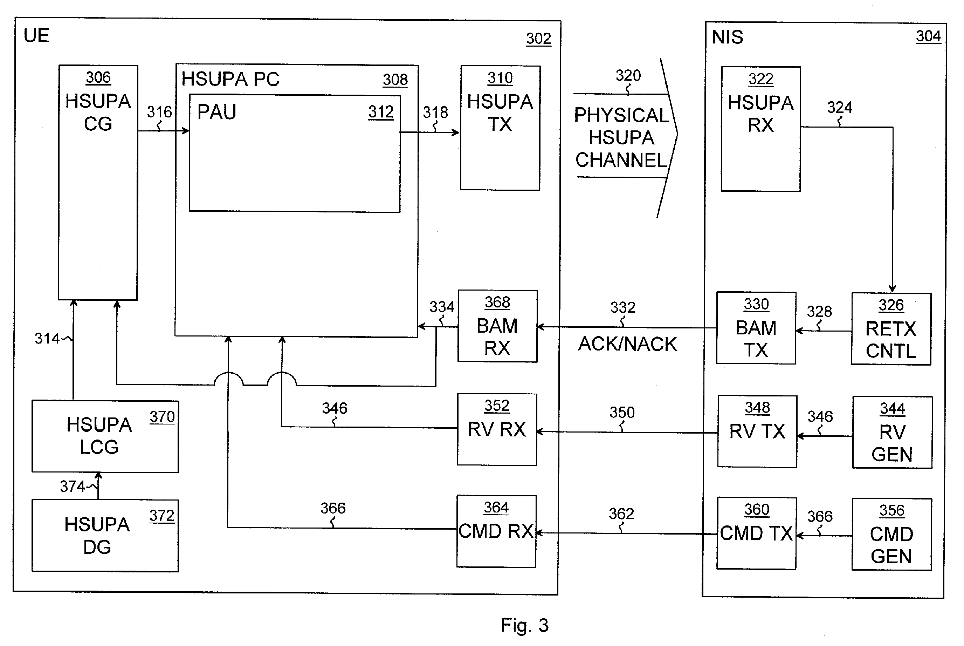

With reference to Figure 3, user equipment 302 supporting the HSUPA protocol includes an HSUPA channel generator (HSUPA CG) 306 that generates a physical HSUPA channel 316 from an HSUPA logical channel 314, such as an E-DCH (Enhanced Dedicated Channel).

The HSUPA logical channels 314 may be generated in an HSUPA logical channel generator 370 from an HSUPA data flow 374 received from an HSUPA data generator (HSUPA DG) 372.

The physical HSUPA channel 316 is inputted into an HSUPA power controller 308. The HSUPA power controller 308 may include a power adjustment unit (PAU) 312 for adjusting the signal power of the physical HSUPA channel 316. The power adjustment unit 312 typically operates in a digital domain and directs power adjustment to a digital signal carrying the physical HSUPA channel 316.

In an embodiment of the invention, the HSUPA power controller 308 controls the transmission power offsets between the physical HSUPA channels and the Dedicated Physical Control Channel.

The power adjustment unit 312 inputs a physical HSUPA channel 318 into an HSUPA transmitter (HSUPA TX) 310 that communicates the data blocks between the user equipment 302 and the network infrastructure 304 over a physical HSUPA channel 320. The HSUPA transmitter 310 typically converts a digital format physical HSUPA channel 318 into radio frequency and transmits the physical HSUPA channel 320 over a radio interface, such as the Uu interface.

An HSUPA receiver (HSUPA RX) 322 located in the network infrastructure 304 receives the physical HSUPA channel 320 transmitted over the radio interface. The HSUPA receiver 322 encodes the data blocks transmitted over the physical HSUPA channel 320 and provides an encoding report 324 to a retransmission controller (RETX CNTL) 326. The encoding report 324 typically includes results of the success of the encoding of each data block.

The retransmission controller 326 receives the encoding report 324 and implements parts of a HARQ protocol. The retransmission controller 326 generates a block acknowledgement message 328 for each data block. The acknowledgement message 328 is inputted into a block acknowledgement message transmitter (BAMTX) 330 that transmits a block acknowledgement message 332 to the user equipment 302 over the radio interface.

The user equipment 302 includes a block acknowledgement message receiver (BAMRX) 368 for communicating the block acknowledgement message 332 between the user equipment 302 and the network infrastructure 304.

The block acknowledgement message receiver 368 receives the block acknowledgement message 332 and inputs a block acknowledgement message 334 into the HSUPA channel generator 306. The HSUPA channel generator 306 may carry out a retransmission procedure according to the HARQ protocol on the basis of the block acknowledgement message 334.

In an embodiment, the HSUPA power controller 308 receives block information messages from the network infrastructure and then adjusts the power offset value between the physical High Speed Uplink Packet Access Channel and Dedicated Physical Control Channel on the basis of at least one block information message.

The block information message may include acknowledgement messages, power control commands, and messages including information on discontinuous transmission. Depending on the type of the received message, the power controller 308 may adjust the power offset values between E-DPDCH/E-DPCCH and DPCCH channels.

Let us set $P_{E\text{-}DPCCH}$ and $P_{E\text{-}DPDCH}$ as the transmission power on the E-DPCCH and E-DPDCH respectively. Then $P_{E\text{-}DPCCH}$ can be calculated as being the product of the power offset between the E-DPCCH and DPCCH and $P_{DPCCH}$ as illustrated by equation 1:

$$P_{E-DPCCH} = PO_{E-DPCCH} \times P_{DPCCH} \tag{1}$$

where $PO_{E\text{-}DPCCH}$ is the power offset between the E-DPCCH and DPCCH and $P_{DPCCH}$ is the transmission power on the DPCCH channel. Further, $P_{E\text{-}DPDCH}$ can be calculated by using equation 2:

$$P_{E-DPDCH} = \min\left(PO_{E-DPDCH} \times P_{DPCCH}, P_{\max} - P_{other}\right) \tag{2}$$

where $P_{max}$ is the maximum transmission power of the user equipment, Pother is the transmission power on the other channels, such as DPCCH, DPDCH, HS-DPCCH and E-DPCCH if they exist simultaneously, and $PO_{E\text{-}DPDCH}$ is the power offset between the E-DPDCH and DPCCH. The power offset $PO_{E\text{-}DPDCH}$ for different TFs (Transport Formats) can be set as:

$$PO_{E-DPDCH\_TFi} = PO_{E-DPDCH\_TFref} \cdot \frac{R_{TFi}}{R_{TFref}} \tag{3}$$

where $R_{Tfi}$ and $R_{Tfref}$ are the data rates corresponding to the $i^{th}$ TF and reference TF.

In an embodiment, the original values of power offsets $P_{E-DPCCH}$ and $P_{E-DPDCH}$ can be set and sent to the user equipment 302 by the network infrastructure 304, for example from the RNC, when the E-DCH channel is set up. During the data transmission, the user equipment can adjust $P_{E-DPCCH}$ and $P_{E-DPDCH}$ on the basis of the ACK/NACK/DTX feedback from the base station by following the rules next described.

If DTX (Discontinuous Transmission) is detected after the user equipment 302 sends data on the E-DPDCH (i.e. the E-DPCCH is not correctly decoded by the NIS 304), the power offset $PO_{E-DPCCH}$ is increased with an up-step $PO_{E-DPCCH\_up}$.

If the user equipment 302 receives ACK or NACK after the user equipment has sent data on the E-DPDCH (i.e. the E-DPCCH is correctly decoded by the NIS 304), the power offset $PO_{E-DPCCH}$ is decreased with a down-step $PO_{E-DPCCH-down}$.

If the user equipment 302 receives NACK (i.e. the E-DPDCH is not correctly decoded by the NIS 304), the power offset of the reference TF is increased with an up-step $PO_{E-DPDCH\_up}$ and the power offset of $i^{th}$ TF can be calculated accordingly.

If the user equipment 302 receives ACK (i.e. the E-DPDCH is correctly decoded by the NIS 304), the power offset of the reference TF is decreased with a down-step $PO_{E-DPDCH\_down}$ and the power offset of $i^{th}$ TF can be calculated accordingly.

By appropriate selection of the ratio between the up-step and down-step, the residual BLER of the E-DPCCH and E-DPDCH after several retransmissions can be expected as the following:

$$BLER = \frac{1}{\dfrac{PO_{up}}{n \times PO_{down}} + 1} \tag{4}$$

where n is the number of the transmissions, n=1 for the E-DPCCH. The up-step and down-step can be set by the RNC and they can be transmitted to the user equipment when the E-DCH is set up.

When the user equipment 302 is in SHO (Soft Handoff) mode, $P_{E-DPCCH}$ and $P_{E-DPDCH}$ adjustment rules are the following.

If DTX (Discontinuous Transmission) is detected in all the active radio links after the user equipment 302 sends data on the E-DPDCH (i.e. the E-DPCCH is not correctly decoded by all base stations), the power offset $PO_{E-DPCCH}$ is increased with an up-step $PO_{E-DPCCH\_up}$.

If the user equipment 302 receives ACK or NACK from at least one radio link after the user equipment has sent data on the E-DPDCH (i.e. the E-DPCCH is correctly decoded by at least one base station), the power offset $PO_{E-DPCCH}$ is decreased with a down-step $PO_{E-DPCCH-down}$.

If the user equipment 302 receives NACK from all the radio links (i.e. the E-DPDCH is not correctly decoded by all the base stations), the power offset of the reference TF is increased with an up-step $PO_{E-DPDCH\_up}$ and the power offset of $i^{th}$ TF can be calculated accordingly.

If the user equipment 302 receives ACK from at least one radio link (i.e. the E-DPDCH is correctly decoded by at least one base station), the power offset of the reference TF is decreased with a down-step $PO_{E-DPDCH\_down}$ and the power offset of $i^{th}$ TF can be calculated accordingly.

In an embodiment, during the data transmission, the network infrastructure (for example, the base station) can adjust $PO_{E-DPCCH}$ and $PO_{E-DPDCH}$ on the basis of the HSUPA BLER that represents the ratio of the number of unsuccessfully received blocks to the total number of blocks transferred by the physical HSUPA channel 320. The BLER of the E-DPCCH and E-DPDCH can be monitored via CRC checking. Based on the difference between the monitored BLER on the E-DPCCH/E-DPDCH and a target BLER value, the network infrastructure can calculate the up-step or down-step and send them to the user equipment 302 with a control command. The step sizes can be fixed for saving the signalling bits or variable for enabling more adaptive control. The step-up/step-down command may be sent, for example, when a base station sends a scheduling grand command to the user equipment.

If the user equipment 302 is in SHO mode, the user equipment will increase the power offset value only if all the base stations request to increase the power offset. Otherwise, the user equipment 302 will decrease the power offset when it gets the power offset change command.

In an embodiment of the invention, the network infrastructure 304 includes a reference value generator (RV GEN) 344 for generating the reference values 346 of the power offsets of the reference TFs and for signalling the reference values 346 to the user equipment 302. The reference value generator 344 inputs the reference value 346 into a reference value transmitter 348 (RV TX), which transmits a signal 350 carrying the reference value 346 over the radio interface. The user equipment 302 may include a reference value receiver (RV RX) 352 that receives the signal 350 carrying the reference value 346 and inputs the reference value 346 into the power controller 308.

In an embodiment of the invention, the HSUPA power controller 312 controls the transmission power of the physical HSUPA channel 320 by taking into account a transport format applied to data blocks to be communicated over the physical HSUPA channel 320. A transport format sensitive power control is also responsible for the applied data transfer rate and thus improves the efficiency of the use of radio resources.

In an embodiment of the invention, the network infrastructure 304 includes a power control command generator (CMD GEN) 356 for generating the power control commands 366 on the basis of the BLER on the E-DPCCH and E-DPDCH. The power control command generator 356 may calculate the up-steps and down-steps and include them in the power control commands.

The power control command transmitter 360 transmits a signal 362 carrying the power control command 366 over the radio interface.

The user equipment 302 may include a power control command receiver (CMD RX) 364 for receiving the signal 362 carrying the power control command 366. The power control command receiver 364 inputs the power control command 366 into the HSUPA power controller 302.

The HSUPA power controller 308 may be implemented with computer programs stored in the memory 122 and executed in the digital signal processor 120 of the user equipment 104. In some applications, ASICs (Application Specific Integrated Circuits) and/or FPGAs (Field Programmable Gate Arrays) may be applied.

The block acknowledgement message transmitter 330, the reference value transmitter 348, and the power control command transmitter 360 may be implemented by using a base station transmitter located in a node B 112A, 112B, 112C, 112D. The power control command generator 356 and the reference value generator 344 may be located in the RNC 110A, 110B and implemented with the digital signal processor and software of the RNC 110A, 110B. The block acknowledgement message receiver 368, the reference value receiver 352 and the power control command receiver 364 may be implemented in the radio frequency parts 118 of the user equipment 104.

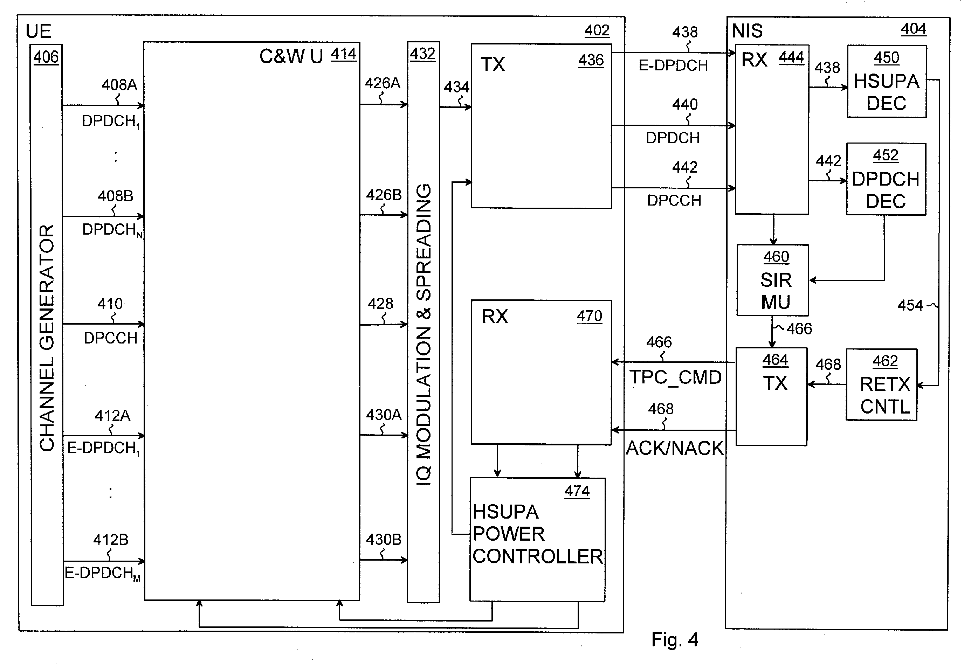

With reference to Figure 4, the parallel code channels, i.e. the DPDCH channels 408A, 408B, the DPCCH channel 410, and the E-DPDCH channels 412A, 412B are generated in a channel generator 406 of the user equipment 402.

The number of DPDCH channels 408A, 408B is denoted N, where N=0,1,2,3,4, 5, for example. The number of E-DPDCH channels 412A, 412B is denoted M, where 1<M<6, for example. The parallel code channels 408A to 412B are inputted into a coding and weighting unit (C&W U) 414 responsible for the channel coding and power adjustment of the parallel code channel 408A to 412B.

Coded and weighted DPDCH channels 426A, 426B are inputted into an IQ modulation and spreading unit 432. A coded and weighted DPCCH channel 428 is inputted into the IQ modulation and spreading unit 432. Coded and weighted E-DPDCH channels 430A, 430B are inputted into the IQ modulation and spreading unit 432. The IQ modulation and spreading unit 432 typically adds up the physical channels 426A to 430B, IQ modulates the combined signals and applies spreading coding to the combined signals.

A combined signal 434 including the physical channels 408A to 412B is inputted into a transmitter 436. The transmitter 436 transmits the E-DPDCH channels 438, the DPDCH channels 440, and the DPCCH channel 442 to the network infrastructure 404 over the radio interface.

A receiver 444 of the network infrastructure 404 receives the E-DPDCH channels 438, the DPDCH channels 440 and the DPCCH channel 442. The receiver 444 is typically a part of a base station transceiver located in one of the nodes B 112A to 112B.

In an embodiment of the invention, the network infrastructure 404 includes an HSUPA decoder 450 connected to the receiver 444. The HSUPA decoder decodes the data blocks carried by the E-DPDCH channels 438 and generates the encoding report 454. The encoding report 454 is delivered to the retransmission controller 462.

The retransmission controller 462 generates the block acknowledgement messages 468 and inputs the block acknowledgement messages 468 into a transmitter 464. The transmitter transmits the block acknowledgement messages 468 to the user equipment 402 over the radio interface.

The DPDCH channels 442 are inputted into a DPDCH decoder 454 responsible for decoding data blocks delivered by the DPDCH channels 440. The DPDCH decoder 452 may calculate the BLER for a plurality of data blocks delivered by the DPDCH channels 440. A SIR measurement unit 460 may measure SIR from DPCCH channel. Based on the BLER, series of power control commands (TPC_CMD) 466 may be generated. The power control commands 466 are inputted into the transmitter 464 and transmitted to the user equipment 402 over the radio interface. A receiver 470 in the user equipment 402 receives the block acknowledgement messages (ACK/NACK) 468 and the power control commands (TCP_CMD) 466.

The power control commands 466 are inputted into a power controller 474 of the user equipment 402. The power controller 474 interprets the power control commands 466 and receives the block acknowledgement messages 468 and adjusts power offset values between the physical High Speed Uplink Packet Access Channels and Dedicated Physical Control Channels on the basis of at least one of the received information messages 466, 468.

The HSUPA power controller thus manages the transmission power offsets between the E-DPDCH channels 438 and the DPCH by the user equipment or the base station. If the user equipment-controlled method is used, no additional controlling information is needed over the Iub and air interfaces. The BTS-controlled method does not increase the Iub signalling overhead and the signalling information over the air interface is not expected to be heavy if fixed up-step/down-step sizes are used.

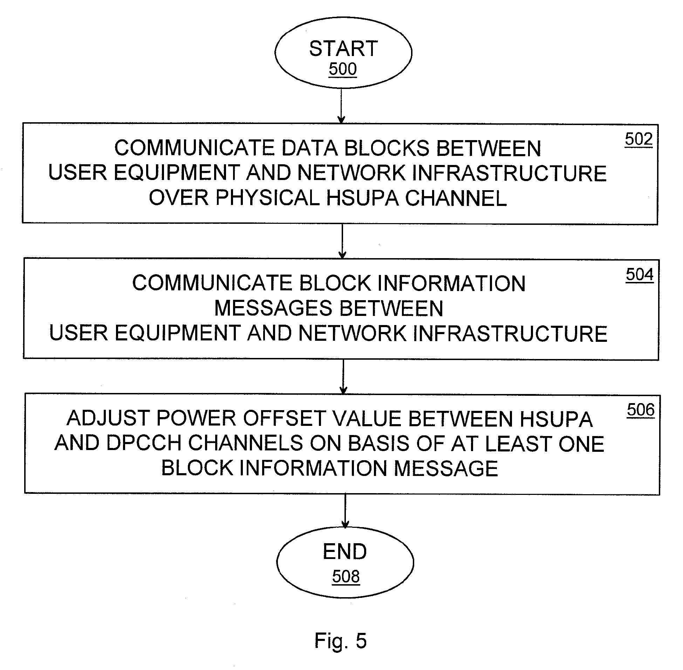

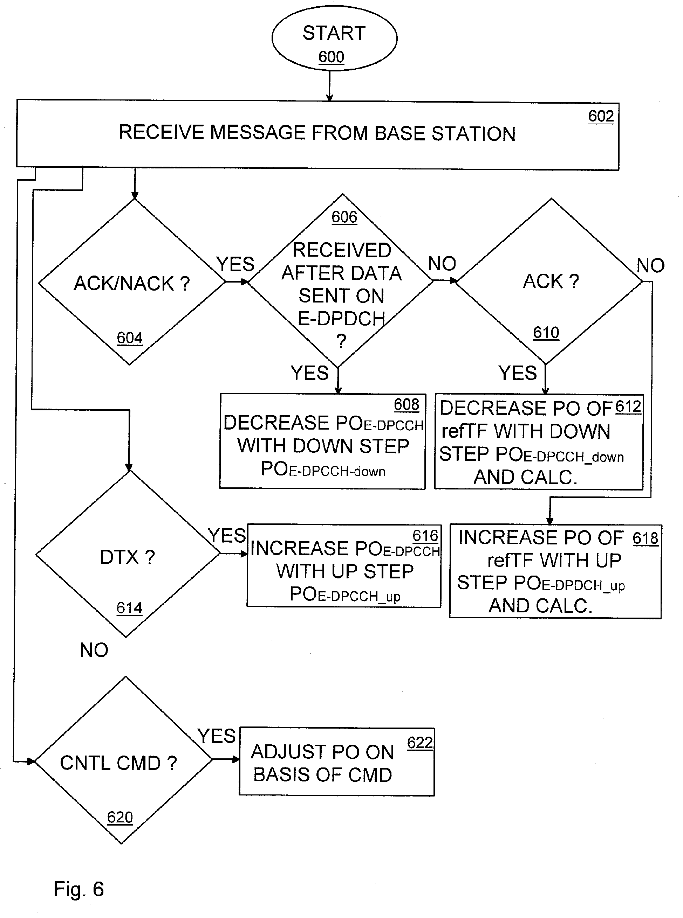

With reference to Figures 5 and 6, examples of methodology according to the embodiments of the invention are shown in flow charts.

In Figure 5, the method starts in 500. In 502, data blocks are communicated between the user equipment and the network infrastructure over the physical HSUPA channel.

In 504, block information messages are communicated between the user equipment and the network infrastructure. In 506, the power offset value between the physical High Speed Uplink Packet Access Channel and Dedicated Physical Control Channel is adjusted on the basis of at least one block information message.

In an embodiment of the invention, each block information message indicates whether or not a data block was decoded correctly. In an embodiment of the invention, the block information message comprises a power control command generated by the network infrastructure, and the power offset value is adjusted on the basis of the received power control command.

In an embodiment of the invention, the block information messages comprise acknowledgement messages, and the power offset value of a reference transport format is decreased with a down-step when a positive acknowledgement message is received by the user equipment.

In an embodiment of the invention, the block information messages comprise acknowledgement messages, and the power offset value of a reference transport format is increased with an up-step when a negative acknowledgement message is received by the user equipment.

In an embodiment, the block information messages comprise positive acknowledgement or negative acknowledgement messages, and the power offset value is decreased with a down-step when a positive or negative acknowledgement message is received after sending data over the physical High Speed Uplink Packet Access channel.

In an embodiment, the block information messages comprise information on discontinuous transmission, and the power offset value is increased with an up-step when discontinuous transmission is detected after the user equipment has sent data on the High Speed Uplink Packet Access channel.

In an embodiment, the original value of a power offset between the High Speed Uplink Packet Access Channel and Dedicated Physical Control Channel is sent to the user equipment by the network infrastructure.

In an embodiment, the High Speed Uplink Packet Access Channel is an Enhanced-Dedicated Physical Data Channel or Enhanced-Dedicated Physical Control Channel. In 508, the method ends.

In Figure 6, the method starts in 600. In 602, the block information message is received in the user equipment from the base station.

In 604, if it is detected that the received message is ACK/NACK, then 606 is entered. In 606, if ACK/NACK was received after data was sent on the E-DPDCH by the user equipment, then 608 is entered, where the power offset value between the E-DPCCH and DPCCH is decreased with a down-step $PO_{E\text{-}DPCCH\_down}$. In 610, if ACK was received, then 612 is entered, where the power offset value of a reference transport format is decreased with a down-step $PO_{E\text{-}DPCCH\_down}$ and the power offset of $i^{th}$ TF is calculated accordingly. In 610, if NACK was received, then 618 is entered, where the power offset value of a reference transport format is increased with an up-step $PO_{E\text{-}DPDCH\_up}$ and the power offset of $i^{th}$ TF is calculated accordingly.

In 614, if a discontinuous transmission is detected after the user equipment has sent data on the E-DPDCH, then 616 is entered, where the power offset between the E-DPCCH and DPCCH is increased with an up-step $PO_{E\text{-}DPCCH\_up}$.

In 620, if the received message is detected to include a power control command, then 622 is entered, where the power offset value is adjusted on the basis of the received power control command. The power control command may be generated by the BTS on the basis of the BLER of the E-DPCCH and E-DPDCH. The BTS can calculate the up-step/down-step and send them in the power control command to the user equipment.

In an aspect, the invention provides a computer program product encoding a computer program of instructions for executing a computer process.

In another aspect, the invention provides a computer program distribution medium readable by a computer and encoding a computer program of instructions for executing a computer process.

The distribution medium may include a computer readable medium, a program storage medium, a record medium, a computer readable memory, a computer readable software distribution package, a computer readable signal, a computer readable telecommunications signal, and/or a computer readable compressed software package.

Embodiments of the computer process are shown and described in conjunction with Figures 5 and 6.

The computer program may be executed in the digital signal processor 120 of the user equipment 104. Some process steps may be executed in the digital signal processor of the node B 112A to 112D. Some process steps may be executed, depending on the embodiment, in the digital signal processor of the radio network controller 110A, 110B.

Even though the invention has been disclosed above with reference to an example according to the accompanying drawings, it is clear that the invention is not restricted thereto but can be modified in several ways within the scope of the appended claims.

**Claims**

1. A method of controlling radio resources in a High Speed Uplink Packet Access system, **characterized by** the method comprising:

   communicating data blocks between a user equipment and a network infrastructure over a physical High Speed Uplink Packet Access channel;
   communicating block information messages between the user equipment and the network infrastructure; and
   adjusting a power offset value between the physical High Speed Up-link Packet Access channel and a Dedicated Physical Control Channel on the basis of at least one block information message.

2. The method of claim 1, wherein each block information message indicates whether a data block was decoded correctly.

3. The method of claim 1, wherein the at least one block information message comprises a power control command generated by the network infrastructure, and the step of adjusting the power offset value comprises adjusting the power offset value by the user equipment on the basis of the received power control command.

4. The method of claim 3, the method further comprising detecting, by a network element of the network infrastructure, a block error rate value of the High Speed Uplink Packet Access channels; comparing a difference between a detected block error rate value and a target block error rate value; and generating the power control command on the basis of the comparison, wherein the step of communicating block information messages comprises sending the power control command to the user equipment.

5. The method of claim 1, wherein the block information messages comprise acknowledgement messages, and the step of adjusting the power offset value comprises decreasing the power offset value of a reference transport format with a down-step when a positive acknowledgement message is received by the user equipment.

6. The method of claim 1, wherein the block information messages comprise acknowledgement messages, and the step of adjusting the power offset value comprises increasing the power offset value of a reference transport format with an up-step when a negative acknowledgement message is received by the user equipment.

7. The method of claim 5, the method further comprising calculating the power offset of a given transport format on the basis of the power offset value of the reference transport format.

8. The method of claim 1, wherein the High Speed Uplink Packet Access channel is an Enhanced-Dedicated Physical Data Channel (E-DPCCH) or Enhanced-Dedicated Physical Control Channel (E-DPCCH).

9. The method of claim 1, wherein the block information messages comprise positive acknowledgement or negative acknowledgement messages, and the step of adjusting the power offset value comprises decreasing the power offset value between E-DPCCH and DPCCH channels with a down-step when a positive or negative acknowledgement message is received after sending data over the physical High Speed Uplink Packet Access channel.

10. The method of claims 1, wherein the block information messages comprise information on discontinuous transmission, and the step of adjusting the power offset value comprises increasing the power offset value between E-DPCCH and DPCCH channels with an up-step when discontinuous transmission is detected after the user equipment has sent data on the High Speed Uplink Packet Access channel.

11. The method of claim 1, the method further comprising sending an original value of power offset between the High Speed Uplink Packet Access channel and the Dedicated Physical Control channel to the user equipment by the network infrastructure.

**12.** User equipment supporting a High Speed Uplink Packet Access protocol, **characterized in that** the user equipment includes:

a transmitter for communicating data blocks between the user equipment and a network infrastructure over a physical High Speed Uplink Packet Access channel;
a receiver for communicating block information messages between the user equipment and the network infrastructure; and
a power controller for adjusting a power offset value between the physical High Speed Uplink Packet Access channel and a Dedicated Physical Control Channel on the basis of at least one block information message.

**13.** The user equipment of claim 12, wherein each block information message indicates whether a data block was decoded correctly.

**14.** The user equipment of claim 12, wherein the block information message comprises a power control command generated by a network element of the network infrastructure by comparing the difference between detected block error rate values and a target block error rate value of the High Speed Uplink Packet Access channels, and the power controller is configured to adjust the power offset value on the basis of the received power control command.

**15.** The user equipment of claim 12, wherein the block information messages comprise acknowledgement messages, and the power controller is configured to adjust the power offset value by decreasing the power offset value of a reference transport format with a down-step when a positive acknowledgement message is received by the receiver.

**16.** The user equipment of claim 12, wherein the block information messages comprise acknowledgement messages, and the power controller is configured to adjust the power offset value by increasing the power offset value of a reference transport format with an up-step when a negative acknowledgement message is received by the receiver.

**17.** The user equipment of claims 15, wherein the power controller is further configured to calculate the power offset value of a given transport format on the basis of the adjusted power offset value of the reference transport format.

**18.** The user equipment of claim 12, wherein the High Speed Uplink Packet Access channel is an Enhanced-Dedicated Physical Data Channel (E-DPDCH) or Enhanced-Dedicated Physical Control Channel (E-DPCCH).

**19.** The user equipment of claims 12, wherein the block information messages comprise positive acknowledgement or negative acknowledgement messages, and the power controller is configured to adjust the power offset value between E-DPCCH and DPCCH channels by decreasing the power offset value with a down-step when a positive or negative acknowledgement message is received by the receiver after sending data over the physical High Speed Uplink Packet Access channel.

**20.** The user equipment of claims 12, wherein the block information messages comprise information on discontinuous transmission, and the power controller is configured to detect discontinuous transmission after the user equipment has sent data on the High Speed Uplink Packet Access channel, and to adjust the power offset value between the E-DPCCH and DPCCH channels by increasing the power offset value with an up-step.

**21.** The user equipment of claim 12, wherein the receiver is further configured to receive an original value of a power offset between the High Speed Uplink Packet Access channel and the Dedicated Physical Control Channel from the network infrastructure.

**22.** A wireless telecommunications system supporting a High Speed Uplink Packet Access protocol, **characterized in that** the wireless telecommunications system includes a network infrastructure and user equipment and the wireless telecommunication system comprises:

a transmitter for communicating data blocks between the user equipment and the network infrastructure over a physical High Speed Uplink Packet Access channel;
a receiver for communicating block information messages between the user equipment and the network infrastructure; and
a power controller for adjusting a power offset value between the physical High Speed Uplink Packet Access channel and a Dedicated Physical Control Channel on the basis of at least one block information message.

23. The wireless telecommunications system of claim 22, wherein each block information message indicates whether a data block was decoded correctly.

24. The wireless telecommunications system of claim 22, wherein the block information message comprises a power control command generated by a network element of the network infrastructure by comparing a difference between a detected block error rate value and a target block error rate value of the High Speed Uplink Packet Access channels, and the power controller is configured to adjust the power offset value on the basis of the received power control command.

25. The wireless telecommunications system of claim 22, wherein the block information messages comprise acknowledgement messages, and the power controller is configured to adjust the power offset value by decreasing the power offset value of a reference transport format with a down-step when a positive acknowledgement message is received.

26. The wireless telecommunications system of claim 22, wherein the block information messages comprise acknowledgement messages, and the power controller is configured to adjust the power offset value by increasing the power offset value of a reference transport format with an up-step when a negative acknowledgement message is received by the receiver.

27. The wireless telecommunications system of claim 22, wherein the High Speed Uplink Packet Access channel is an Enhanced-Dedicated Physical Data Channel (E-DPDCH) or an Enhanced-Dedicated Physical Control Channel (E-DPCCH).

28. The wireless telecommunications system of claims 22, wherein the block information messages comprise positive acknowledgement or negative acknowledgement messages, and the power controller is configured to adjust the power offset value between E-DPCCH and DPCCH channels by decreasing the power offset value with a down-step when a positive or negative acknowledgement message is received by the receiver after sending data over the physical High Speed Uplink Packet Access channel.

29. The wireless telecommunications system of claims 22, wherein the block information messages comprise information on discontinuous transmission, and the power controller is configured to detect discontinuous transmission after the user equipment has sent data on the High Speed Uplink Packet Access channel, and to adjust the power offset value between E-DPCCH and DPCCH channels by increasing the power offset value with an up-step.

30. A network element of a wireless telecommunications system supporting a High Speed Uplink Packet Access protocol, **characterized in that** the network element comprises detection means for detecting a block error rate value of High Speed Uplink Packet Access channels, comparing means for comparing the difference between the detected block error rate value and a target block error rate value, generating means for generating a power control command on the basis of the comparison, and communication means for sending the power control command to user equipment, wherein a power offset value between the physical High Speed Uplink Packet Access channel and a Dedicated Physical Control Channel is adjusted on the basis of the power control command.

31. A computer program product encoding a computer program of instructions for executing a computer process for controlling radio resources in a High Speed Uplink Packet Access system, **characterized in that** the process includes:

communicating data blocks between user equipment and a network infrastructure over a physical High Speed Uplink Packet Access channel;
communicating block information messages between the user equipment and the network infrastructure; and
adjusting a power offset value between the physical High Speed Up-link Packet Access channel and a Dedicated Physical Control Channel on the basis of at least one block information message.

32. A computer program distribution medium readable by a computer and encoding a computer program of instructions for executing a computer process for controlling radio resources in a High Speed Uplink Packet Access system, **characterized in that** the process includes:

communicating data blocks between user equipment and a network infrastructure over a physical High Speed Uplink Packet Access channel;

communicating block information messages between the user equipment and the network infrastructure; and adjusting a power offset value between the physical High Speed Up-link Packet Access channel and a Dedicated Physical Control Channel on the basis of at least one block information message.

33. The computer program distribution medium of claim 32, the distribution medium comprising a computer readable medium, a program storage medium, a record medium, a computer readable memory, a computer readable software distribution package, a computer readable signal, a computer readable telecommunications signal, or a computer readable compressed software package.

Fig. 1

NIS
200

UE
202

PILOT SEQUENCES
————— UL-DPCCH————
204

SIGNAL
QUALITY
ESTIMATION
&
POWER
COMMAND
GENERATION

POWER CONTROL COMMANDS
————————— DL-DPCCH —————————
206

HIGH PRIORITY SERVICES
————————— DPDCH—————————
208

HIGH DATA RATE SERVICES
————— E-DPDCH—————————
210

RECEIVE
DATA
BLOCKS

BLOCK
ACK/NACK
MESSAGE

ACK/NACK MESSAGE
————— E-AKC/NACH CH —————
212

Fig. 2

**304 NIS**

322 HSUPA RX

326 RETX CNTL
344 RV GEN
356 CMD GEN

328
346
366

330 BAM TX
348 RV TX
360 CMD TX

320 PHYSICAL HSUPA CHANNEL

332 ACK/NACK
350
362

**302 UE**

310 HSUPA TX

368 BAM RX
352 RV RX
364 CMD RX

334
346
366

308 HSUPA PC
312 PAU

318
316

306 HSUPA CG

370 HSUPA LCG

372 HSUPA DG

314
374

Fig. 3

Fig. 4

START
500

COMMUNICATE DATA BLOCKS BETWEEN
USER EQUIPMENT AND NETWORK INFRASTRUCTURE
OVER PHYSICAL HSUPA CHANNEL

502

COMMUNICATE BLOCK INFORMATION
MESSAGES BETWEEN
USER EQUIPMENT AND NETWORK INFRASTRUCTURE

504

ADJUST POWER OFFSET VALUE BETWEEN HSUPA
AND DPCCH CHANNELS ON BASIS OF AT LEAST ONE
BLOCK INFORMATION MESSAGE

506

END
508

Fig. 5

START
600

RECEIVE MESSAGE FROM BASE STATION    602

ACK/NACK ?    604

606
RECEIVED AFTER DATA SENT ON E-DPDCH ?

ACK ?    610

YES → 606
NO → 610
YES (606) → 608
NO (610)
YES (610) → 612

DECREASE PO$_{E-DPCCH}$ WITH DOWN STEP PO$_{E-DPCCH-down}$    608

DECREASE PO OF refTF WITH DOWN STEP PO$_{E-DPCCH\_down}$ AND CALC.    612

DTX ?    614

YES → INCREASE PO$_{E-DPCCH}$ WITH UP STEP PO$_{E-DPCCH\_up}$    616

INCREASE PO OF refTF WITH UP STEP PO$_{E-DPDCH\_up}$ AND CALC.    618

NO

CNTL CMD ?    620

YES → ADJUST PO ON BASIS OF CMD    622

Fig. 6

18